# FASCICULE DE BREVET EUROPEEN

(11) **EP 0 477 120 B1**
(45) Date de publication et mention de la délivrance du brevet: **21.09.1994**
(21) Numéro de dépôt: 91470023.2
(22) Date de dépôt: 26.08.1991
(51) Int. Cl.: G01B 15/02, G01B 15/04

(54) **Procédé et dispositif de mesure de profil transversal d'épaisseur d'une bande métallique notamment en acier**
Verfahren und Vorrichtung zum Messen des Querprofils der Dicke eines metallischen Bandes, vorzugsweise aus Stahl
Method and apparatus for the transversal profile thickness measurement of a metallic band, especially made of steel

(30) Priorité: 05.09.1990 FR 9011037
(43) Date de publication de la demande: 25.03.1992
(73) Titulaire: SOLLAC, 92800 Puteaux (FR)
(72) Inventeur: Gauje, Pierre, F-78740 Evecquemont (FR)
(74) Mandataire: Ventavoli, Roger

(56) Documents cités:
- EP-A- 0 075 190
- DE-A- 3 113 440
- IEEE 40TH ANNUAL CONFERENCE, Proceedings of the Annual Conference on Electrical Engineering, Problems in the Rubber and Plastics Industries, Akron, OH, US, 11-12 April 1988, pages 28-34, H.T. Jaggers: "A new measurement and control system for rubber calendering"

## Description

L'invention a pour objet un procédé et un dispositif de mesure de profil transversal d'épaisseur d'une bande métallique notamment en acier, sur un train de laminage de tôles à chaud ou à froid.

Ce dispositif comprend un tube émetteur de rayonnement et un détecteur linéaire de rayonnement, disposés de part et d'autre du plan de ladite bande, et des moyens électroniques d'acquisition, de mesure et de commande.

On connaît, par exemple des documents JP-A-62-229019 ou JP-A-66-229018, des dispositifs de mesure de profil d'épaisseur d'objet en défilement, tels que des bandes métalliques, par absorption de rayons X, qui comprennent un émetteur de rayons X et un détecteur de rayons X constitué d'une chambre d'ionisation à détecteurs multiples. On connaît par le document EP-A-0075190 un dispositif de ce type dans lequel des masques calibrés pour l'absorption du rayonnement sont utilisés comme étalons pour permettre d'étendre l'application du dispositif à un large éventail d'épaisseurs de produits à inspecter. Mais ces dispositifs, d'une part, ont souvent une résolution transversale insuffisante, de l'ordre de 1,9 mm, du fait de la chambre d'ionisation à détecteurs multiples, et d'autre part, ne paraissent pas aptes à donner des mesures de précision satisfaisante dans la zone du voisinage de la rive de la bande métallique sur une largeur pouvant atteindre plusieurs dizaines de mm. Ce deuxième inconvénient provient de ce que les rayons X sont diffusés de manière inhomogène au voisinage de la rive de la bande, et cette inhomogénéité vient perturber la mesure.

Le but de l'invention est donc d'améliorer la résolution transversale et de permettre de mesurer l'épaisseur de la bande métallique jusqu'au proche voisinage de la rive de celle-ci avec une bonne précision.

A cet effet, l'invention a pour objet le procédé pour mesurer le profil d'épaisseur d'une bande métallique défini à la Revendication 1.

L'invention a également pour objet le dispositif de mise en oeuvre défini à la Revendication 2.

Comme on le comprend, l'invention consiste essentiellement en ce qu'on interpose un masque entre le détecteur et l'émetteur en le positionnant de manière qu'il occulte la partie du faisceau émis non occultée par la bande et qu'il déborde la rive de la bande sur une zone de recouvrement de largeur déterminée, afin d'occulter la partie correspondante du faisceau rayonné traversant le bord de bande, et on maintient constante cette largeur de débordement pendant la mesure.

Le masque est situé soit entre la bande et le détecteur soit entre le tube émetteur et la bande. Lorsqu'il est situé entre l'émetteur et la bande, le masque occulte la partie du rayonnement qui serait interceptée par la zone de la bande située en rive de celle-ci.

Les déplacements du support du masque peuvent être commandés par des moyens de mesure comportant des moyens de détermination de la largeur de ladite zone de recouvrement et des moyens d'asservissement de la position dudit masque à la mesure de cette largeur de façon à conserver cette dernière constante.

Le tube émetteur de rayonnement peut être un émetteur de rayons X et le détecteur linéaire est avantageusement une barrette de photodiodes recouverte d'une substance scintillante.

D'autres particularités et avantages de l'invention apparaîtront au cours de la description qui va suivre, faite en regard des dessins annexés qui en illustrent une forme de réalisation non limitative.

La figure 1 est une vue schématique en élévation illustrant le principe de l'invention.

La figure 2 est une vue en perspective d'une forme de réalisation du dispositif de mesure visé par l'invention.

La figure 3 est un graphique illustrant le signal délivré par le détecteur avec utilisation d'un masque selon l'invention.

La figure 4 est un graphique montrant un exemple de mesure réalisée avec le dispositif selon l'invention.

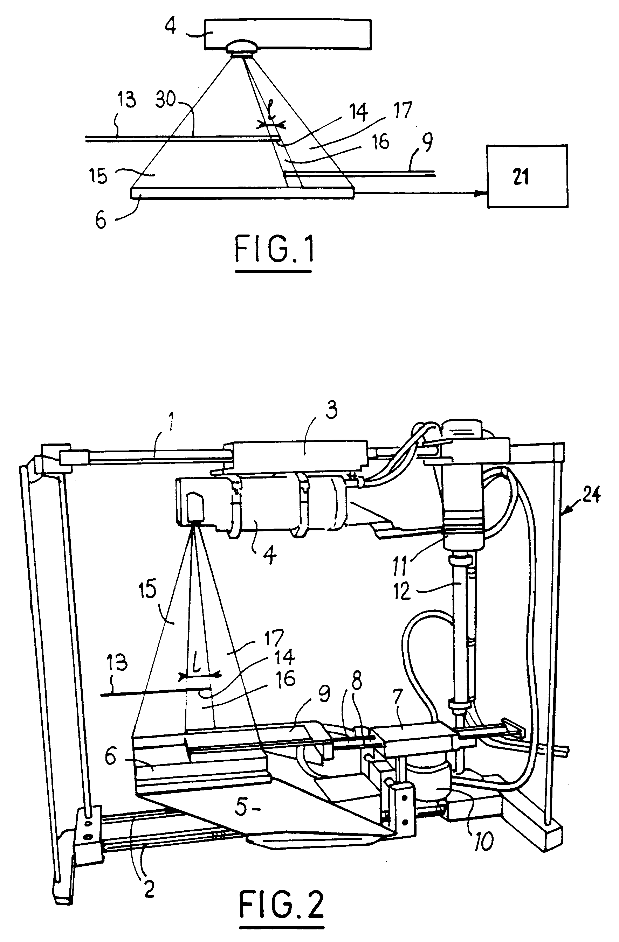

Le dispositif représenté à la Fig. 2 comprend des glissières supérieures 1 et des glissières inférieures 2 fixées sur un bâti 24. Un chariot 3 est monté coulissant sur les glissières supérieures 1 et porte un tube émetteur 4 de rayons X (ou éventuellement de rayons gamma), un chariot 5 est monté coulissant sur les glissières inférieures 2 et porte, d'une part un détecteur linéaire 6 et d'autre part un bloc 7 dans lequel coulissent des glissières 8 qui portent une plaque 9 fixée aux extrémités des glissières 8. Le chariot 5 porte également un moteur pas à pas 10 d'entraînement des glissières 8 en translation dans le bloc 7, par des moyens non représentés tels qu'une courroie crantée.

Un moteur pas à pas 11 monté sur le bâti 24 peut entraîner le chariot 3 de manière connue, par exemple par une courroie crantée supérieure (non représentée) s'étendant le long des glissières 1 et solidaire du chariot 3. Il entraîne également le chariot 5 par l'intermédiaire d'un arbre 12, et d'une courroie crantée (non représentée) s'étendant le long d'une glissière 2 et solidaire du chariot 5.

La plaque 9 est constituée d'un matériau voisin de celui constituant les bandes dont les épaisseurs seront mesurées avec le dispositif décrit, par exemple de l'acier doux. L'épaisseur de la plaque 9 peut varier par gradins ; chaque gradin sert alors d'étalon d'épaisseur mais peut également être utilisé comme masque, ainsi qu'il sera expliqué plus loin. Mais pour assurer cette fonction, la plaque peut être remplacée par une plaque d'épaisseur constante. Des moyens connus détectent la position des chariots mobiles 3 et 5 par rapport au bâti 24, et la position de la plaque 9 par rapport au bloc 7 solidaire du chariot 5.

Les moyens de commande des moteurs pas à pas 10 et 11, les moyens de détection de la position des chariots mobiles 3 et 5 et de la plaque 9, le moyen de commande du tube 4 à rayons X, et le détecteur linéaire 6 sont reliés à des moyens électroniques d'acquisition, de mesure et de commande 21 (Fig.1), réalisés de manière connue en soi.

Lorsque l'on désire mesurer le profil d'épaisseur transversal d'une bande 13, par exemple en acier, on dispose l'appareil de mesure de manière que la bande 13 soit située entre les glissières 1 et 2 dans un plan parallèle à celles-ci et situé, par exemple à environ 20cm, au dessus du détecteur 6. La bande s'étend horizontalement et est en défilement ou à l'arrêt sur le train de laminage.

A l'aide du moteur 11, on déplace les chariots 3 et 5 de façon à disposer le tube 4 à rayons X et le détecteur 6 l'un en face de l'autre au droit de la zone de la bande dont on veut mesurer l'épaisseur; cette zone est constituée par la zone 30 traversée par une partie 15 du faisceau de rayons X traversant la bande 13 et non interceptée par le masque 9.

A l'aide du moteur 10, la plaque 9 est disposée comme représenté aux Fig.1 et 2, de façon à masquer la partie 17 du faisceau qui n'est pas interceptée par la bande 13 ainsi que la partie 16 du faisceau interceptée par la zone 14 de la bande située au voisinage immédiat de sa rive.

La partie 15 du rayonnement X, après avoir traversé la bande 13, est reçue par le détecteur 6 qui engendre un signal que les moyens électroniques 21 d'acquisition, de mesure et de commande enregistrent.

Ce signal représente l'intensité du rayonnement X reçu par chacun des points du détecteur 6 en fonction de leur position. Ce signal permet par un calcul connu en soi, de déterminer le profil d'épaisseur dans le sens transversal de la bande.

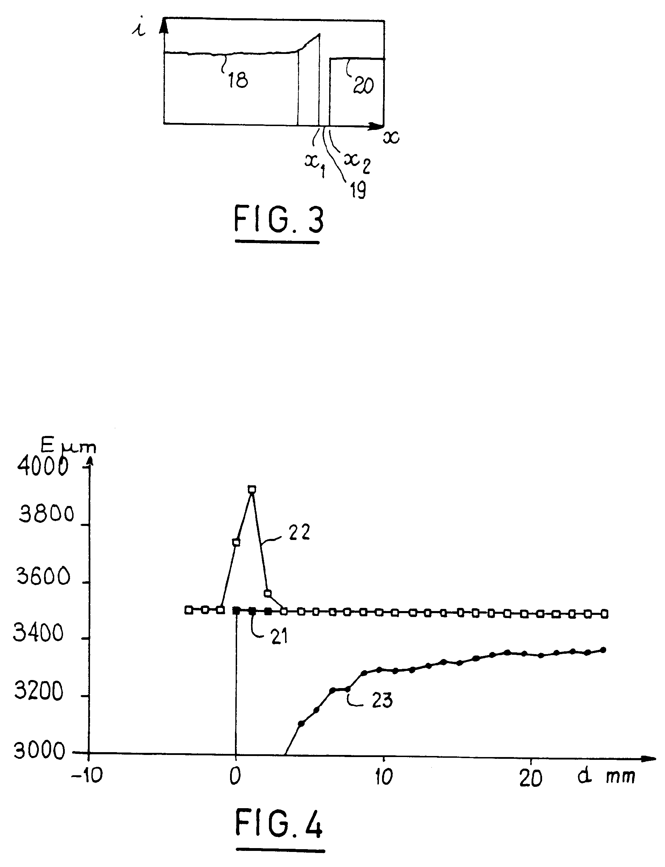

La figure 3 est un graphique représentant le signal émis par le détecteur 6, avec en abscisses la position x du point de mesure le long du détecteur 6 et en ordonnée l'intensité i du signal émis. La courbe obtenue comporte trois parties :
- une première partie 18 correspondant à la portion 15 du faisceau de rayons X qui traverse la bande 13 et elle seule. Cette partie 18 permet de calculer l'épaisseur de la bande.
- une deuxième partie 19 correspondant à la portion 16 du faisceau de rayons X qui traverse à la fois la bande 13 et le masque 9 (zone de recouvrement 14). Cette portion est située entre les abscisses x1 et x2 et la différence Δ x = x2 - x1 entre ces abscisses représente la largeur de la zone 14 de la bande 13 occultée par le masque 9, zone de recouvrement dans laquelle on ne peut pas mesurer l'épaisseur. Cette zone peut avoir par exemple une largeur de 1 à 2mm.
- une troisième partie 20 correspondant à la portion 17 du faisceau de rayons X, interceptée par le masque 9 seul. Cette portion ne sert pas directement à la mesure,mais peut servir de référence d'épaisseur.

La bande 13 pouvant être en mouvement pendant la mesure, sa rive peut se déplacer par rapport au dispositif de mesure. Ce déplacement de la rive peut faire varier la largeur l de la zone de recouvrement de la bande 13 et du masque 9, et même faire disparaître cette zone de recouvrement. C'est en particulier le cas lorsque le dispositif de mesure d'épaisseur est installé sur une ligne sur laquelle la bande 13 défile en continu.

Pour éviter cet inconvénient, la position du masque 9 est asservie par des moyens connus à la largeur l de la zone de recouvrement 14 de la bande 13 et du masque 9, de façon à conserver cette largeur l constante.

Pour cela les moyens électroniques et informatiques d'acquisition, de mesure et de commande, déterminent de façon connue x2 et x1, puis Δx = x2-x1, comparent Δx à une référence ΔxO choisie par l'opérateur. L'écart Δx - ΔxO sert alors de signal de commande pour les moyens de commande du moteur 10, qui déplace les glissières 8 et le masque 9 jusqu'à l'annulation de cet écart.

La figure 4 est un graphique sur lequel est portée en abscisses, la largeur d de la bande 13 et en ordonnées son épaisseur E en µm, et qui donne un exemple numérique de mesures réalisées à partir de la rive de la bande (abscisse zéro).

La bande en acier doux a une épaisseur de 3,5mm et la tension d'alimentation du tube de rayons X peut être de 75 kV. La courbe 21 représente le profil réel d'épaisseur de la bande. La courbe 22 représente le profil mesuré par le dispositif selon l'invention avec le masque 9 en position. On voit que, sauf pour les trois premiers millimètres, la mesure est excellente car la courbe 22 se confond pratiquement avec la courbe 21. Le pic observé sur les trois premiers millimètres de la courbe 22 provient du recouvrement entre la bande 13 et le masque 9 dans la zone de rive 14.

La courbe 23 est le profil d'épaisseur mesuré par le dispositif selon l'invention mais dans lequel on a enlevé le masque 9. On voit sur cette courbe 23 que l'effet de diffusion des rayons X et d'éblouissement du détecteur 6 est très important, puisqu'il fausse la mesure au moins jusqu'à 25mm de la rive.

Le dispositif selon l'invention permet ainsi d'obtenir une résolution transversale de 1mm environ, et une précision de mesure très satisfaisante au voisinage de la rive de la tôle. Pour une tôle d'épaisseur inférieure au mm le temps de mesure pour le profil complet se situe dans la fourchette de 0,1s à 1s. De plus les détecteurs à photodiodes étant beaucoup plus simples que les détecteurs à chambres d'ionisation multiples, sont beaucoup moins onéreux.

Le détecteur linéaire peut être un détecteur du type THX 9577 de la société THOMSON. Il comprend en particulier une barrette de 144 photodiodes rectangulaires mesurant 1,6mm sur 3,2mm et recouvertes d'une substance scintillante.

Parmi les diverses variantes de réalisation possibles, on notera celle selon laquelle le masque 9 peut être disposé entre l'émetteur 4 de rayons X et la bande 13 dont on veut mesurer l'épaisseur.

## Revendications

1. Procédé pour mesurer le profil d'épaisseur d'une bande métallique (13), notamment en acier, au moyen d'un dispositif selon lequel on positionne au-dessus et au-dessous de la bande respectivement, un émetteur (4) de rayonnement et un détecteur linéaire (6) du faisceau émis, et on enregistre un signal électrique (i) représentatif de la variation transversale d'épaisseur de la bande (13) jusqu'au voisinage de l'une de ses rives, caractérisé en ce qu'on interpose un masque (9) entre le détecteur (6) et l'émetteur (4) en le positionnant de manière qu'il occulte la partie (17) du faisceau émis non occultée par la bande (13) et qu'il déborde la rive de la bande sur une zone de recouvrement (14) de largeur déterminée (l), afin d'occulter la partie correspondante (16) du faisceau rayonné traversant la zone de cette rive, et on maintient constante cette largeur (l) de débordement pendant la mesure.

2. Dispositif de mesure, par absorption de rayonnement, du profil d'épaisseur d'une bande métallique, notamment en acier, du type comprenant un tube émetteur (4) de rayonnement et un détecteur linéaire (6) de rayonnement, disposés de part et d'autre du plan de ladite bande et des moyens électroniques (21) d'acquisition, de mesure et de commande, et un masque (9) interposé entre le tube (4) émetteur et le détecteur (6), caractérisé en ce que le masque est placé pour occulter partiellement le rayonnement émis par le tube émetteur (4) et masquer la partie correspondante du détecteur (6), et ce en débordant des limites du bord de rive de la bande de façon à créer une zone de recouvrement (14) de largeur l, et en ce que des moyens sont prévus pour régler la position du masque de façon à conserver constante la largeur (l) de la zone de débordement (14).

3. Dispositif suivant la revendication 2, caractérisé en ce que ledit masque (9) est situé entre la bande et le détecteur.

4. Dispositif suivant la revendication 2, caractérisé en ce que ledit masque (9) est situé entre le tube émetteur (4) et la bande.

5. Dispositif suivant la revendication 2, caractérisé en ce que lesdits moyens de réglage de la position du masque sont des moyens électroniques (21) d'acquisition de mesure comportant des moyens de détection de la largeur (l) de la zone de recouvrement (14) située en rive de la bande (13), et des moyens d'asservissement de la position dudit masque (9) à la mesure de ladite largeur de façon à conserver cette dernière constante.

6. Dispositif suivant la revendication 2, caractérisé en ce que le rayonnement émis par le tube émetteur (4) est un rayonnement X.

7. Dispositif suivant la revendication 6, caractérisé en ce que le détecteur linéaire (6) comprend une barrette de photodiodes recouvertes d'une substance scintillante.

8. Dispositif suivant la revendication 1, caractérisé en ce qu'il comprend un chariot (3) de support du tube émetteur (4) de rayonnement monté coulissant sur des glissières (1) de guidage placées à la partie supérieure d'un bâti fixe (24), un chariot (5) de support du détecteur linéaire (6) monté coulissant sur des glissières (2) de la partie inférieure du bâti et un bloc (7) dans lequel sont montées à coulisse des glissières (8) de support du masque (9), les différentes glissières précitées s'étendant perpendiculairement à la direction longitudinale à la bande (13) dont doit être mesurée l'épaisseur, ainsi que des moteurs (10, 11) de commande des déplacements des chariots (3, 5) et du masque (9).

## Patentansprüche

1. Verfahren zum Messen des Dickenprofils eines metallischen Bandes (13), insbesondere aus Stahl, mit Hilfe einer Vorrichtung gemäß welcher man oberhalb beziehungsweise unterhalb dem Band einen Strahlungsemitter (4) und einen linearen Detektor (6) für das ausgestrahlte Strahlenbündel anordnet und man ein elektrisches Signal (i) aufnimmt, welches repräsentativ für die Veränderungen der Querdicke des Bandes (13) bis hin in die Nähe eines seiner Ränder ist, dadurch gekennzeichnet, daß man zwischen den Detektor (6) und den Strahler (4) eine Blende (9) einlegt und man sie auf solche Weise anordnet, daß sie jenen nicht von dem Band (13) verdunkelten Teil (17) des ausgestrahlten Bündels verdunkelt, und daß sie über den Rand des Bandes (13) hinaus bis in einen Überlappungsbereich (14) von einer gegebenen Breite (l) hineinragt, um den entsprechenden Teil (16) des Strahlenbündels welcher den Bereich dieses Randes durchdringt zu verdunkeln, und daß man diese überlappende Breite (l) während der Messung konstant hält.

2. Vorrichtung zum Messen, durch Absorption der Strahlung, des Dickenprofils eines metallischen Bandes, insbesondere aus Stahl, von einer Bauart die eine Strahlen emittierende Röhre (4) und einen linearen Detektor (6), welche auf der einen beziehungsweise auf der anderen Seite der Ebene des besagten Bandes angeordnet sind, die elektronischen Mittel (21) für die Erfassung, die Messung und die Steuerung, sowie eine zwischen der Strahlerröhre (4) und dem Detektor (6) liegende Blende (9) in sich einschließt, dadurch gekennzeichnet, daß die Blende so angeordnet ist, daß sie die durch die Strahlerröhre (4) emittierte Strahlung teilweise verdunkelt und den entsprechenden Teil des Detektors (6) abdeckt, dies indem sie auf solche Weise über die Grenzen des Bandrandes hinausragt, daß ein Überlappungsbereich (14) von einer Breite (l) geschaffen wird, und daß Mittel vorgesehen sind, um die Stellung der Blende derart zu regeln, daß die Breite (l) des Überlappungsbereiches (14) konstant gehalten wird.

3. Vorrichtung gemäß Anspruch 2, dadurch gekennzeichnet, daß die besagte Blende (9) sich zwischen dem Band und dem Detektor befindet.

4. Vorrichtung gemäß Anspruch 2, dadurch gekennzeichnet, daß die besagte Blende (9) sich zwischen der Strahlerröhre (4) und dem Band befindet.

5. Vorrichtung gemäß Anspruch 2, dadurch gekennzeichnet, daß die besagten Mittel zum Regeln der Stellung der Blende elektronische Hilfsmittel (21) zum Erfassen von Messungen sind, welche ausgestattet sind mit Mitteln zur Erfassung der Breite (l) des sich am Rande des Bandes (13) befindenden Überlappungsbereiches (14) und mit Mitteln zum Regeln der Stellung der besagten Blende (9) in Abhängigkeit von der Messung der besagten Breite so daß diese Breite konstant gehalten wird.

6. Vorrichtung gemäß Anspruch 2, dadurch gekennzeichnet, daß die von der Strahlerröhre (4) emittierte Strahlung eine Röntgenstrahlung ist.

7. Vorrichtung gemäß Anspruch 6, dadurch gekennzeichnet, daß der lineare Detektor 6 eine Schiene mit Photodioden aufweist welche mit einem Szintillationsstoff überzogen sind.

8. Vorrichtung gemäß Anspruch 1, dadurch gekennzeichnet, daß sie ausgestattet ist mit einem Schlitten (3) zum Halten der die Strahlen emittierenden Röhre (4), welche gleitend auf den an dem oberen Teil eines festen Rahmens (24) angebrachten Gleitschienen (1) aufgebaut ist, mit einem Schlitten 5 zum Halten des linearen Detektors (6), welcher gleitend auf den Gleitschienen (2) des unteren Teiles des Rahmens aufgebaut ist, mit einem Block (7) in welchem verstellbare Führungsschienen (8) zum Halten der Blende (9) eingebaut sind, wobei die verschiedenen vorher erwähnten Schienen sich senkrecht zur Längsrichtung des Bandes (13) dessen Dicke gemessen werden soll erstrecken, sowie mit den Motoren (10,11) zur Steuerung der Bewegungen der Schlitten (3,5) und der Blende (9).

## Claims

1. Method for measuring the thickness profile of a metal strip (13), particularly made of steel, by means of a device according to which a radiation emitter (4) and a linear detector (6) of the emitted beam are positioned respectively above and below the strip, and an electric signal (i) representing the transverse variation in thickness of the strip (13) right up to the vicinity of one of its edges is recorded, characterized in that a mask (9) is interposed between the detector (6) and the emitter (4), positioning it such that it occults that part (17) of the emitted beam which is not occulted by the strip (13) and that it overhangs the edge of the strip over an overlap zone (14) of given width (l), in order to occult the corresponding part (16) of the radiated beam passing through the zone of this edge, and this overhang width (1) is kept constant during the measurement.

2. Device for measuring, by radiation absorption, the thickness profile of a metal strip, particularly one made of steel, of the type comprising a radiation-emitter tube (4) and a linear radiation-detector (6), which are located on either side of the plane of the said strip and electronic means (21) for acquiring, measuring and controlling, and a mask (9) interposed between the emitter tube (4) and the detector (6), characterized in that the mask is placed so as partially to occult the radiation emitted by the emitter tube (4) and to mask the corresponding part of the detector (6), this being while overhanging the limits of the edge border of the strip so as to create an overlap zone (14) of width l, and in that means are provided for adjusting the position of the mask so as to keep the width (l) of the overhang zone (14) constant.

3. Device according to Claim 2, characterized in that the said mask (9) is situated between the strip and the detector.

4. Device according to Claim 2, characterized in that the said mask (9) is situated between the emitter tube (4) and the strip.

5. Device according to Claim 2, characterized in that the said means for adjusting the position of the mask are electronic means (21) for measurement acquisition including means for detecting the width (l) of the overlap zone (14) situated at the edge of the strip (13), and means for slaving the position of the said mask (9) to the measurement of the said width so as to keep the latter constant.

6. Device according to Claim 2, characterized in that the radiation emitted by the emitter tube (4) is X-radiation.

7. Device according to Claim 6, characterized in that the linear detector (6) comprises a linear array of photodiodes covered with a scintillating substance.

8. Device according to Claim 1, characterized in that it comprises a carriage (3) for supporting the radiation-emitter tube (4), mounted slidingly on guide slideways (1) placed at the upper part of a fixed framework (24), a carriage (5) for supporting the linear detector (6) mounted slidingly on slideways (2) of the lower part of the framework and a unit (7) in which are slidingly mounted slideways (8) for supporting the mask (9), the aforementioned various slideways extending perpendicularly to the direction longitudinal to the strip (13) the thickness of which is to be measured, as well as motors (10, 11) for controlling the displacements of the carriages (3, 5) and of the mask (9).
